# EUROPEAN PATENT APPLICATION

(11) **EP 4 628 722 A1**
(43) Date of publication of application: **08.10.2025**
(21) Application number: 22969163.9
(22) Date of filing: 20.12.2022
(51) Int. Cl.: F02F 5/00

(54) **OIL CONTROL RING**

(71) Applicant: Kabushiki Kaisha Riken, Tokyo 102-8202 (JP)
(72) Inventor: NAMBA Yukihiko, Kashiwazaki-shi, Niigata 945-8555 (JP); HIRADE Yoshiyuki, Kashiwazaki-shi, Niigata 945-8555 (JP)
(74) Representative: Arnold & Siedsma
(86) International application number: PCT/JP2022/046912
(87) International publication number: WO 2024/134774

(57) **Abstract**

An oil control ring includes: a main body portion having an annular shape, that includes an inner peripheral surface and an outer peripheral surface, and one side surface and an other side surface substantially orthogonal to the inner peripheral surface; and a coil expander installed along the inner peripheral surface. In the oil control ring, the main body portion includes a pair of first rail portion and second rail portion each having an annular shape, and a pillar portion connecting the first rail portion and the second rail portion. The outer peripheral surfaces of the first rail portion and the second rail portion each include a protruding surface having a cross-sectional shape protruding convexly outward in a radial direction. The protruding surface is an arcuate surface having a radius of curvature of 0.30 mm or less in a sliding contact region including a vertex that is a radially outermost point of the first rail portion or the second rail portion.

## Description

### Technical Field

The present disclosure relates to an oil control ring used in an internal combustion engine.

### Background Art

As an oil control ring used in an internal combustion engine for an automobile or the like, for example, Patent Document 1 discloses a two-piece oil ring configured such that an outer peripheral surface of upper and lower rail portions includes a sliding surface that slides on an inner peripheral surface of a cylinder, and a taper surface disposed on a combustion chamber side (upper surface side of the oil ring) of the sliding surface and gradually decreasing in diameter toward the combustion chamber side.

### Citation List

### Patent Literature

Patent Literature 1: Japanese Unexamined Patent Publication No. H09-144881

### Summary of Invention

### Technical Problem

In the above conventional oil ring, in order to reduce oil consumption, the area of the sliding surface that slides on the inner peripheral surface of the cylinder is relatively reduced by providing the taper surface. The contact surface pressure between the sliding surface and the inner peripheral surface of the cylinder becomes high, thereby promoting the oil scraping action during piston descent. During piston ascent, the sliding surface rides on an oil film formed between the taper surface and the inner peripheral surface of the cylinder, thereby suppressing oil scraping-up. However, in the above conventional oil ring, the cross-sectional shape of the sliding contact region including the portion in sliding contact with the inner peripheral surface of the cylinder and its vicinity is vertically asymmetric, and it becomes necessary to manage the front and back, which affects manufacturing cost.

An object of the present disclosure is to provide an oil control ring capable of reducing oil consumption while simplifying the cross-sectional shape of the outer peripheral surfaces of the first rail portion and the second rail portion.

### Solution to Problem

In order to solve the above problem, the inventors have conducted intensive studies. As a result, the inventors have found a configuration of the outer peripheral surface that can be made vertically symmetric at least in the sliding contact region on the outer peripheral surface of the oil control ring while reducing oil consumption.

An oil control ring according to one aspect of the present disclosure is an oil control ring including: a main body portion having an annular shape, that includes an inner peripheral surface and an outer peripheral surface, and one side surface and an other side surface substantially orthogonal to the inner peripheral surface; and a coil expander installed along the inner peripheral surface, wherein the main body portion includes a pair of first rail portion and second rail portion each having an annular shape, and a pillar portion connecting the first rail portion and the second rail portion, wherein the outer peripheral surfaces of the first rail portion and the second rail portion each include a protruding surface having a cross-sectional shape protruding convexly outward in a radial direction, and wherein the protruding surface is an arcuate surface having a radius of curvature of 0.30 mm or less in a sliding contact region including a vertex that is a radially outermost point of the first rail portion or the second rail portion.

In the oil control ring according to one aspect of the present disclosure, the outer peripheral surfaces of the first rail portion and the second rail portion each include a protruding surface having a cross-sectional shape protruding convexly outward in a radial direction. The protruding surface is an arcuate surface having a radius of curvature of 0.30 mm or less in a sliding contact region including a vertex that is a radially outermost point of the first rail portion or the second rail portion. According to such a configuration, at least a part of the protruding surface forming the arcuate surface forms a sliding contact region that is symmetric in the axial direction with respect to the vertex. By making the cross-sectional shape vertically symmetric at least in the sliding contact region in this way, the cross-sectional shape is simplified. The sliding contact region can sufficiently scrape down oil. Therefore, it is possible to reduce oil consumption. Accordingly, it is possible to reduce oil consumption while simplifying the cross-sectional shape of the outer peripheral surfaces of the first rail portion and the second rail portion.

An oil control ring according to another aspect of the present disclosure is an oil control ring including: a main body portion having an annular shape, that includes an inner peripheral surface and an outer peripheral surface, and one side surface and an other side surface substantially orthogonal to the inner peripheral surface; and a coil expander installed along the inner peripheral surface, wherein the main body portion includes a pair of first rail portion and second rail portion each having an annular shape, and a pillar portion connecting the first rail portion and the second rail portion, wherein the outer peripheral surfaces of the first rail portion and the second rail portion each include a protruding surface having a cross-sectional shape protruding convexly outward in a radial direction, and wherein at least a part of the protruding surface is located on a virtual convex surface passing through a vertex that is an outermost point in a radial direction of the first rail portion or the second rail portion, and a pair of points each spaced apart from the vertex by 0.05 mm on both sides in an axial direction and positioned inward in the radial direction at a predetermined drop, and wherein the drop is 0.0045 mm or more.

In the oil control ring according to another aspect of the present disclosure, the outer peripheral surfaces of the first rail portion and the second rail portion each include a protruding surface having a cross-sectional shape protruding convexly outward in a radial direction. At least a part of the protruding surface is located on a virtual convex surface passing through the vertex and a pair of points each spaced apart from the vertex by 0.05 mm on both sides in an axial direction and positioned inward in the radial direction at a predetermined drop. The drop is 0.0045 mm or more. According to such a configuration, at least a part of the protruding surface along the virtual convex surface forms a sliding contact region that is symmetric in the axial direction with respect to the vertex. By making the cross-sectional shape vertically symmetric at least in the sliding contact region in this way, the cross-sectional shape is simplified. The sliding contact region can sufficiently scrape down oil. Therefore, it is possible to reduce oil consumption. Accordingly, it is possible to reduce oil consumption while simplifying the cross-sectional shape of the outer peripheral surfaces of the first rail portion and the second rail portion.

In one embodiment, the vertex may be located at a central portion in an axial direction of the outer peripheral surface of each of the first rail portion and the second rail portion. According to such a configuration, not only the sliding contact region but also the entire outer peripheral surface of each of the first and second rail portions becomes vertically symmetric as a whole. Therefore, it is possible to prevent reverse assembly of the oil control ring front and back in advance.

In one embodiment, the outer peripheral surfaces of the first rail portion and the second rail portion each may include a first arcuate surface including the vertex, a pair of bevel surfaces that are tapered surfaces inclined at a predetermined angle with respect to the radial direction, and second arcuate surfaces each connecting the protruding surface and the bevel surface, and a radius of curvature of the first arcuate surface may be greater than a radius of curvature of the second arcuate surface. According to such a configuration, a portion of the first and second rail portions near one side surface or the other side surface of the oil control ring is not sharp. Therefore, it is possible to prevent defects that may occur if the shape is sharp.

In one embodiment, a ratio R2/R1 of the radius of curvature R2 of the second arcuate surface to the radius of curvature R1 of the first arcuate surface may be 0.1 or more and 0.6 or less.

An oil control ring according to still another aspect of the present disclosure is an oil control ring including: a main body portion having an annular shape, that includes an inner peripheral surface and an outer peripheral surface, and one side surface and an other side surface substantially orthogonal to the inner peripheral surface; and a coil expander installed along the inner peripheral surface, wherein the main body portion includes a pair of first rail portion and second rail portion each having an annular shape, and a pillar portion connecting the first rail portion and the second rail portion, wherein the outer peripheral surfaces of the first rail portion and the second rail portion each include a protruding surface having a cross-sectional shape protruding convexly outward in a radial direction, wherein the protruding surface includes a sliding contact region including a pair of partial arcuate surfaces and a flat portion, wherein the pair of partial arcuate surfaces are provided on the one side surface and the other side surface, respectively, wherein the flat portion extends in parallel with an axial direction so as to connect the pair of partial arcuate surfaces, wherein the pair of partial arcuate surfaces are each a part of an arcuate surface having a radius of curvature of 0.30 mm or less passing through both axial ends of the sliding contact region, and wherein the sliding contact region has a cross-sectional shape symmetrical with respect to a virtual vertex that is a virtual outermost point of the arcuate surface in the radial direction.

In the oil control ring according to still another aspect of the present disclosure, the outer peripheral surfaces of the first rail portion and the second rail portion each include a protruding surface having a cross-sectional shape protruding convexly outward in a radial direction. The protruding surface includes a sliding contact region including a pair of partial arcuate surfaces provided on each side of the one side surface and the other side surface, and a flat portion extending in parallel with an axial direction so as to connect the pair of partial arcuate surfaces. The pair of partial arcuate surfaces are each a part of an arcuate surface having a radius of curvature of 0.30 mm or less passing through both axial ends of the sliding contact region. The sliding contact region has a cross-sectional shape symmetrical with respect to a virtual vertex that is a virtual outermost point of the arcuate surface in the radial direction. According to such a configuration, the flat portion of the protruding surface and the pair of partial arcuate surfaces on both upper and lower sides of the flat portion form a sliding contact region that is symmetric in the axial direction with respect to the virtual vertex. By making the cross-sectional shape vertically symmetric at least in the sliding contact region in this way, the cross-sectional shape is simplified. The sliding contact region can sufficiently scrape down oil. Therefore, it is possible to reduce oil consumption. Accordingly, it is possible to reduce oil consumption while simplifying the cross-sectional shape of the outer peripheral surfaces of the first rail portion and the second rail portion.

In one embodiment, an axial dimension of the flat portion may be greater than 0 mm and less than 0.100 mm.

### Advantageous Effects of Invention

According to various embodiments of the present disclosure, it is possible to reduce oil consumption while simplifying the cross-sectional shape of the outer peripheral surfaces of the first rail portion and the second rail portion.

### Brief Description of Drawings

FIG. 1 is a perspective view of an example of an oil control ring according to an embodiment.
FIG. 2 is an exploded perspective view of the oil control ring of FIG. 1.
FIG. 3 is a plan view of the oil ring main body portion of FIG. 2.
FIG. 4 is a cross-sectional view taken along line IV-IV of FIG. 3.
FIG. 5 is an enlarged view of a main part of the cross section of FIG. 4 (an enlarged view of the outer peripheral portion of the first rail portion).
   (a) of FIG. 6 is an enlarged cross-sectional view of the sliding contact portion in the cross section of FIG. 5.
   (b) of FIG. 6 is an enlarged cross-sectional view corresponding to (a) of FIG. 6 for the oil ring main body portion according to a modified example.
FIG. 7 is a diagram illustrating simulation results of the oil control ring including the cross section of (b) of FIG. 6.

### Description of Embodiments

Hereinafter, embodiments of the present disclosure will be described with reference to the drawings. In the following description, the same or equivalent elements are denoted by the same reference numerals, and a redundant description is omitted.

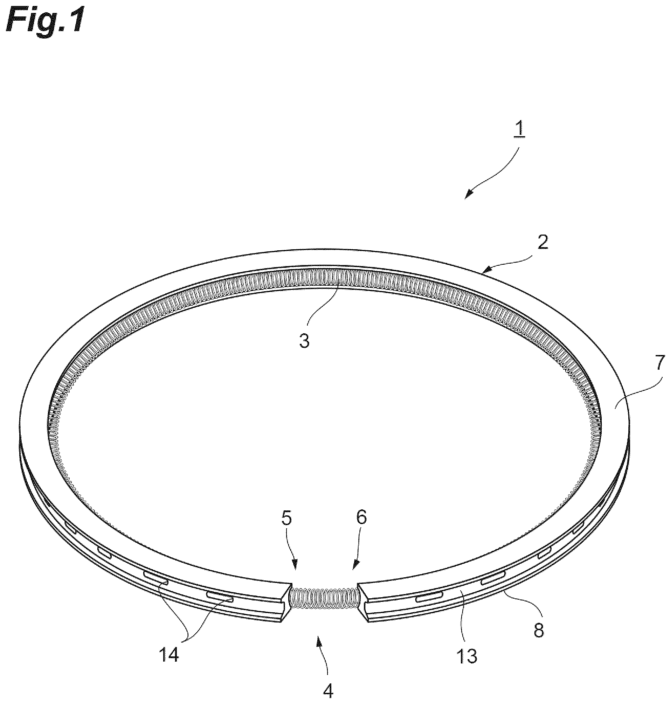

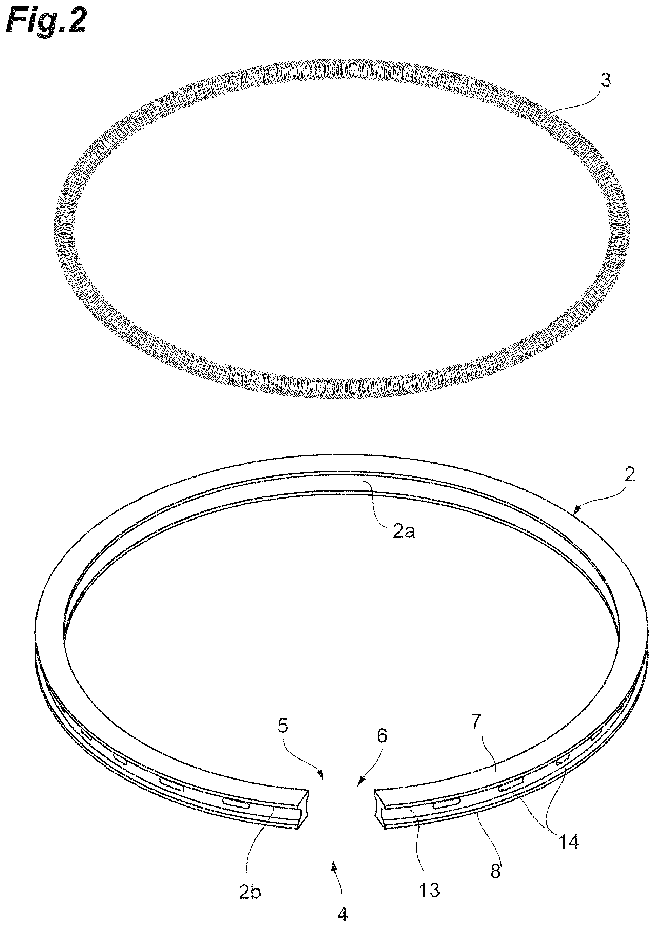

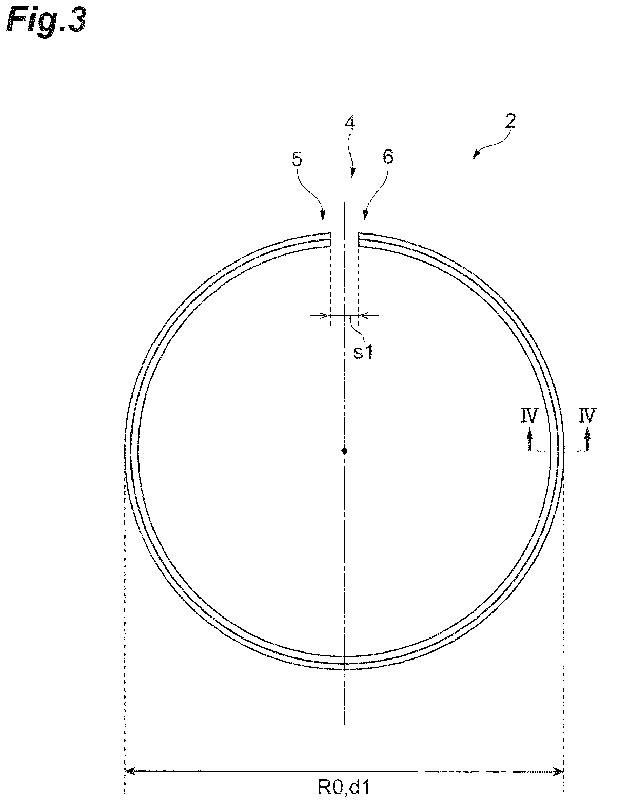

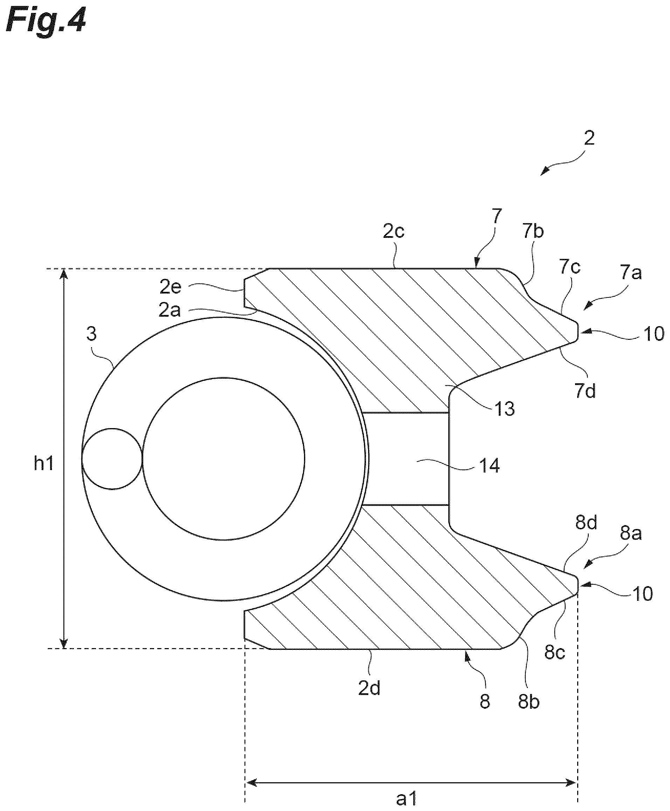

FIG. 1 is a perspective view of an example of an oil control ring according to an embodiment. FIG. 2 is an exploded perspective view of the oil control ring of FIG. 1. FIG. 3 is a plan view of the oil ring main body portion of FIG. 2. FIG. 4 is a cross-sectional view taken along line IV-IV of FIG. 3. In the following description, the term "cross-sectional shape" means a cross-sectional shape along a section including the central axis of the oil control ring.

As shown in FIGS. 1, 2, and 3, the oil control ring 1 includes an annular main body portion 2 and an annular coil expander 3 installed along an inner peripheral surface 2a of the main body portion 2. The oil control ring 1 is a so-called two-piece oil ring. A joint portion 4 is formed in the main body portion 2.

The oil control ring 1 is used, for example, by being assembled into a ring groove provided on an outer peripheral surface of a piston of an internal combustion engine for an automobile. The main body portion 2 abuts against an inner peripheral surface of a cylinder with a substantially constant surface pressure by a tangential tension of the coil expander 3. As shown in FIG. 2, the coil expander 3 is a spring-like component formed in an annular shape. The coil expander 3 is formed, for example, from a wire material such as oil-quenched spring steel.

The main body portion 2 is formed of, for example, cast iron or steel material (steel) containing a plurality of metal elements so as to have strength, heat resistance, and elasticity required according to the application. Surface modification such as a hard chrome plating layer, a chromium nitride layer, a PVD layer, or an iron nitride layer is applied to the outer peripheral surface 2b (the outer peripheral surfaces of the first rail portion 7 and the second rail portion 8) of the main body portion 2, thereby improving the wear resistance of the main body portion 2.

As shown in FIGS. 1, 2, and 4, the main body portion 2 includes a pair of first rail portion 7 and second rail portion 8, and a pillar portion 13 connecting the first rail portion 7 and the second rail portion 8.

As shown in FIG. 4, the inner peripheral surface 2a of the main body portion 2 includes a curved surface recessed toward the pillar portion 13 so that the coil expander 3 can be accommodated. The main body portion 2 includes a pair of side surfaces 2c (one side surface) and 2d (the other side surface) that are substantially orthogonal to a pair of end surfaces (inner peripheral surfaces) 2e on the radially inner side of the inner peripheral surface 2a. In the following description, a direction connecting the inner peripheral surface 2a and the outer peripheral surface 2b is defined as a thickness direction of the oil control ring 1. A direction connecting the side surface 2c and the side surface 2d is defined as a width direction of the oil control ring 1. A radial direction of the oil control ring 1 is a direction coinciding with the thickness direction.

The width h1 of the main body portion 2 is, for example, 1.0 mm or more and 5.0 mm or less. The thickness a1 of the main body portion 2 is, for example, 1.0 mm or more and 5.0 mm or less. The outer diameter R0 (nominal diameter d1, see FIG. 3) of the main body portion 2 is, for example, 60 mm or more and 400 mm or less. Each dimension of the main body portion 2 can be measured using a contact or non-contact type shape measuring device. The shape measuring device includes a surface roughness measuring device.

The pair of first rail portion 7 and second rail portion 8 are opposed to each other with the pillar portion 13 interposed therebetween in an axial direction of the oil control ring 1. The pillar portion 13 connects the central portions in the thickness direction of the first rail portion 7 and the second rail portion 8. The first rail portion 7 is disposed on the side surface 2c side of the pillar portion 13 and projects to both the inner and outer sides in the radial direction with respect to the pillar portion 13. The second rail portion 8 is disposed on the side surface 2d side of the pillar portion 13 and projects to both the inner and outer sides in the radial direction with respect to the pillar portion 13. The pillar portion 13 is formed to be thinner than the first rail portion 7 and the second rail portion 8 in the thickness direction. Thus, the main body portion 2 has a substantially H-shaped cross-sectional shape. The first rail portion 7 and the second rail portion 8 are integrally formed with the pillar portion 13.

As shown in FIGS. 1 and 2, a plurality of oil passage holes 14 are provided in the central portion in the width direction of the pillar portion 13 along the circumferential direction of the oil control ring 1. Each of the plurality of oil passage holes 14 has a cross-sectional shape along the circumferential direction, which is, for example, substantially elliptical. As shown in FIG. 4, the oil passage holes 14 are provided in the central portion in the axial direction of the pillar portion 13. The oil passage holes 14 penetrate the pillar portion 13 in the radial direction.

The plurality of oil passage holes 14 are formed, for example, by drilling using cutting or laser. Oil for lubricating the inner peripheral surface of the cylinder is supplied to the inner peripheral surface of the cylinder by passing from the inner peripheral side to the outer peripheral side of the pillar portion 13 through the plurality of oil passage holes 14. The oil on the inner peripheral surface of the cylinder is returned, for example, to an oil pan by passing from the outer peripheral side to the inner peripheral side of the pillar portion 13 through the plurality of oil passage holes 14.

As shown in FIGS. 1 to 3, the joint portion 4 is a portion in which a part of the main body portion 2 is divided, and is formed by a pair of joint end portions 5 and 6 facing each other. Each of the pair of joint end portions 5 and 6 is a free end of the main body portion 2. A gap (joint gap s1) of the joint portion 4 is set so as not to contact, for example, when the oil control ring 1 is heated and thermally expanded. The joint portion 4 functions as a relief portion for thermal expansion of the main body portion 2 due to a temperature difference between the oil control ring 1 and the cylinder during use of the oil control ring 1.

In such an oil control ring 1, for example, when the piston moves to the top dead center side, oil is applied to the inner peripheral surface of the cylinder by the first rail portion 7 and the second rail portion 8 to form an oil film. When the piston moves to the bottom dead center side, the oil control ring 1 scrapes off excess oil on the inner peripheral surface of the cylinder by the first rail portion 7 and the second rail portion 8. As a result, an oil film of an appropriate thickness is formed on the inner peripheral surface of the cylinder.

Next, the outer peripheral surface 2b of the main body portion 2 will be described in detail. As shown in FIG. 4, the outer peripheral surface 2b of the main body portion 2 includes an outer peripheral surface 7a of the first rail portion 7 and an outer peripheral surface 8a of the second rail portion 8. Here, since the second rail portion 8 is symmetrical to the first rail portion 7 in the axial direction with respect to a center of the main body portion 2 in the width direction, the configuration of the first rail portion 7 will be described as a representative, and a redundant description of the second rail portion 8 will be omitted.

The outer peripheral surface 7a of the first rail portion 7 includes a protruding surface 10, a bevel surface 7c, and a bevel surface 7d. The protruding surface 10 is a portion having a cross-sectional shape protruding convexly outward in the radial direction. The bevel surfaces 7c and 7d are tapered surfaces inclined at predetermined angles θ1 and θ2 with respect to the radial direction. The bevel surface 7c connects the protruding surface 10 and the side surface 2c via a connecting portion 7b. The bevel surface 7d connects the protruding surface 10 and the pillar portion 13. The predetermined angles θ1 and θ2 may be, for example, 10° or more and 35° or less. The protruding surface 10 is defined in its cross-sectional shape and degree of protrusion so as to easily form an oil film on the inner peripheral surface of the cylinder. The predetermined angles θ1 and θ2 may be equal to each other or may be different from each other.

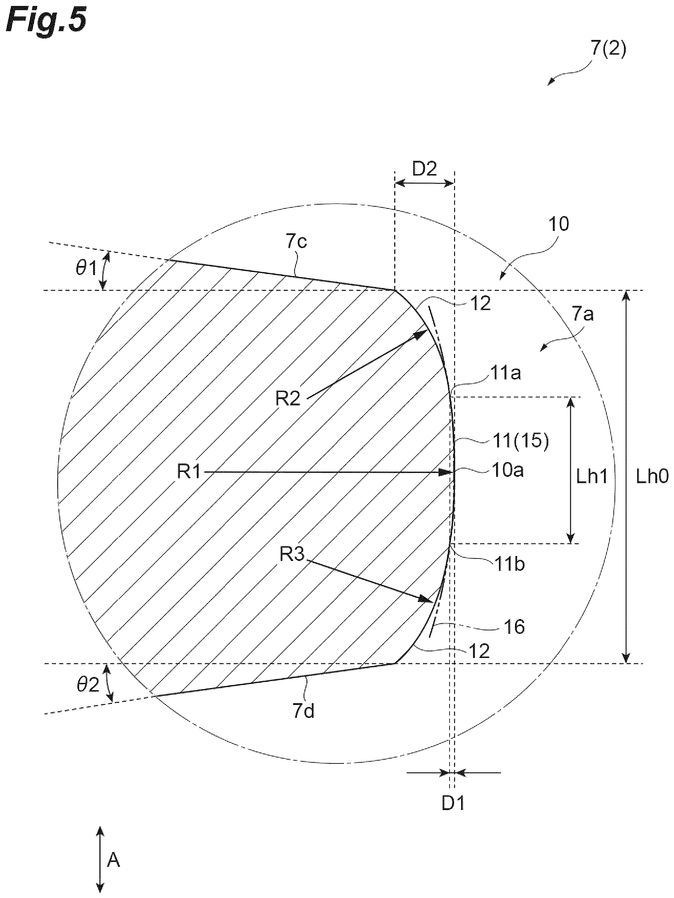

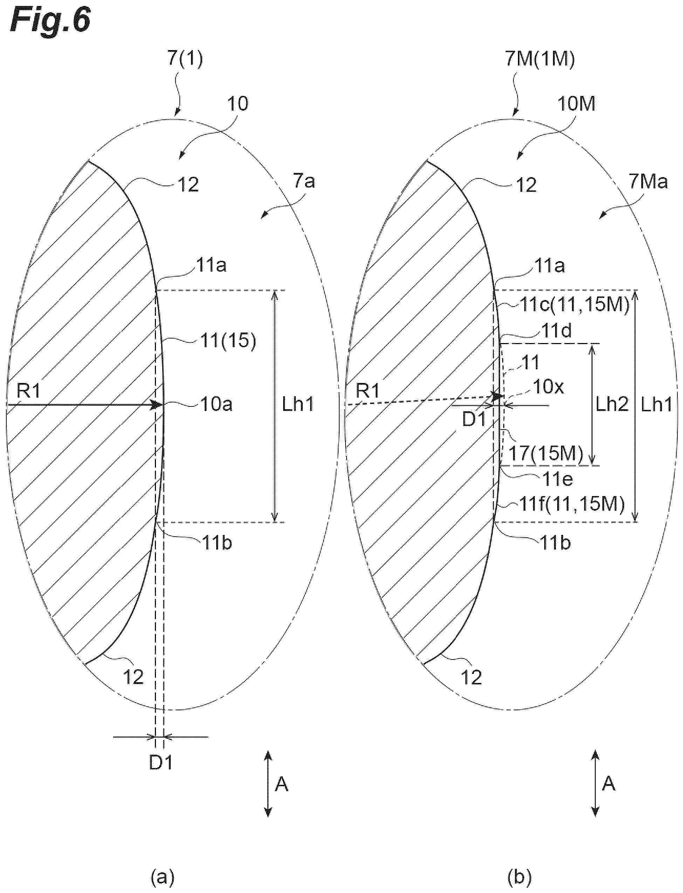

FIG. 5 is an enlarged view of a main part of the cross section of FIG. 4 (an enlarged view of the outer peripheral surface 7a of the first rail portion 7). (a) of FIG. 6 is an enlarged cross-sectional view of the sliding contact portion in the cross section of FIG. 5. As shown in FIG. 5 and (a) of FIG. 6, the protruding surface 10 (the outer peripheral surface 7a of the first rail portion 7) includes a first arcuate surface 11, a pair of bevel surfaces 7c, 7d, and a pair of second arcuate surfaces 12 connecting the first arcuate surface 11 and the bevel surfaces 7c, 7d. The protruding surface 10 is, for example, composed of three curved regions: the first arcuate surface 11 and the pair of second arcuate surfaces 12. In other words, the first rail portion 7 has a symmetrical barrel shape that is symmetrical in the width direction A with the first arcuate surface 11 including an outermost point (vertex 10a) of the outer peripheral surface 7a as a boundary.

A sliding contact region 15 (the first arcuate surface 11) is a region including a sliding contact portion that slides on the inner peripheral surface of the cylinder and a sliding contact peripheral portion within a certain range on both sides in the axial direction with the sliding contact portion interposed therebetween. The certain range corresponds to a range of an actual contact width Lh1 of the first rail portion 7 with the inner peripheral surface of the cylinder. The certain range, for example, coincides with a range from an end portion 11a on the top dead center side to an end portion 11b on the bottom dead center side of the first arcuate surface 11. The certain range may be a part of the range from the end portion 11a on the top dead center side to the end portion 11b on the bottom dead center side of the first arcuate surface 11. The actual contact width Lh1 may be 0.010 mm or more and 0.15 mm or less. The actual contact width Lh1 can be, for example, 0.10 mm.

The first arcuate surface 11 includes the vertex 10a, which is the outermost point in a radial direction of the first rail portion 7. The vertex 10a corresponds to the sliding contact portion that slides on the inner peripheral surface of the cylinder. Of the first arcuate surface 11, the portion from the vertex 10a to the end portion 11a and the portion from the vertex 10a to the end portion 11b correspond to the sliding contact peripheral portions within a certain range on both sides in the axial direction with the sliding contact portion interposed therebetween.

At the vertex 10a and in this certain range, the protruding surface 10 includes the sliding contact region 15. The sliding contact region 15 is a portion of the outer peripheral surface 7a of the first rail portion 7 that contributes to oil film formation on the inner peripheral surface of the cylinder. The sliding contact region 15 is a portion that contributes to oil film formation. Generally, the portion that contributes to oil film formation tends to have a complex cross-sectional shape if various contrivances are made. By simplifying the cross-sectional shape of the sliding contact region 15, it becomes easier to reduce manufacturing costs. Therefore, the sliding contact region 15 has a cross-sectional shape that is symmetrical (vertically symmetrical) in the axial direction with respect to the vertex 10a. In the examples of FIG. 5 and (a) of FIG. 6, the sliding contact region 15 coincides with the range of the first arcuate surface 11. The sliding contact region 15 may be a part of the first arcuate surface 11 that is symmetrical in the axial direction with respect to the vertex 10a.

In the examples of FIGS. 5 and (a) of FIG. 6, the vertex 10a is located at the central portion in the axial direction of the outer peripheral surface 7a of the first rail portion 7. That is, the first rail portion 7 has a cross-sectional shape that is symmetrical in the axial direction with respect to the vertex 10a.

The first arcuate surface 11 is an arcuate surface having a radius of curvature R1 of 0.30 mm or less. The radius of curvature R1 may be 0.050 mm or more. The radius of curvature R1 may be 0.076 mm or more and 0.276 mm or less. The first arcuate surface 11 forms the sliding contact region 15 that is symmetrical in the axial direction with respect to the vertex 10a.

The radius of curvature R1 of the first arcuate surface 11 is greater than the radii of curvature R2 and R3 of the second arcuate surfaces 12. For example, the ratios R2/R1 and R3/R1 of the radii of curvature R2 and R3 of the second arcuate surfaces 12 to the radius of curvature R1 of the first arcuate surface 11 are 0.1 or more and 0.6 or less. The radii of curvature R2 and R3 of the second arcuate surfaces 12 may be equal to each other, for example. The radii of curvature R2 and R3 of the second arcuate surfaces 12 may be different from each other, for example.

The axial dimension (outer peripheral surface width Lh0) of the protruding surface 10 is, for example, 0.10 mm or more and 0.30 mm or less. The axial dimension of the protruding surface 10 corresponds to the axial dimension from the boundary between the bevel surface 7c and the protruding surface 10 to the boundary between the bevel surface 7d and the protruding surface 10. The radial dimension D2 from the vertex 10a to the boundary between the bevel surface 7c (or the bevel surface 7d) and the protruding surface 10 may be 0.0045 mm or more and 0.0150 mm or less.

From another perspective, at least a part of the protruding surface 10 (here, the first arcuate surface 11) is located on a virtual convex surface 16 passing through the vertex 10a and a pair of points, which are the end portions 11a and 11b. The pair of points, which are the end portions 11a and 11b, are points each spaced apart from the vertex 10a by 0.05 mm on both sides in an axial direction and positioned inward in the radial direction at a predetermined drop D1. The drop D1 is 0.0045 mm or more. The drop D1 may be 0.0150 mm or less. The drop D1 may be 0.0075 mm or more and 0.0100 mm or less.

### Examples

The present disclosure will be described in more detail by the following examples, but the present invention is not limited to these examples.

### (Example 1)

As shown in Table 1, the oil control ring 1 of Example 1 was produced by the following procedure. First, a main body portion 2 including the first arcuate surface 11 provided on the outer peripheral surface 7a of the first rail portion 7 and the outer peripheral surface 8a of the second rail portion 8 was produced. The main body portion 2 was produced by using hard steel wire (equivalent to SWRH77B according to JIS standard) and subjecting the wire material to rolling roll forming and drawing forming. The width of the main body portion 2 was set to 3.0 mm. The thickness of the main body portion 2 was set to 2.5 mm. The actual contact width Lh1 was set to 0.04 mm. The tension was set to 12.48 N. The first arcuate surface 11 was an arcuate surface having a radius of curvature R1 of 0.30 mm with the vertex 10a disposed at the central portion. The widths of the first rail portion 7 and the second rail portion 8 were set to 0.25 mm. In order to compare oil consumption performance, the surface pressure of the oil control ring 1 was set to 2.6 MPa (calculated surface pressure width = Lh1). After performing side surface processing and joint processing on the main body portion 2, a hard carbon film (DLC film) was formed as a hard film on the outer peripheral surface 2b of the main body portion 2 by a PVD method.

### (Example 2)

The oil control ring 1 of Example 2 was produced. The actual contact width Lh1 was set to 0.05 mm, and the tension was set to 15.60 N; otherwise, the oil control ring 1 was the same as that of Example 1.

### (Comparative Example 1)

A comparative oil control ring (Comparative Example 1) including a sliding contact surface along the axial direction and a taper surface as the outer peripheral surface of the main body portion of the oil control ring was produced. The angle of the taper surface with respect to the axial direction was set to 9°. Except for the shape of the outer peripheral surface of the main body portion, the oil control ring was produced in the same manner as in Example 1. The contact width between the sliding contact surface and the inner peripheral surface of the cylinder was 0.18 mm.

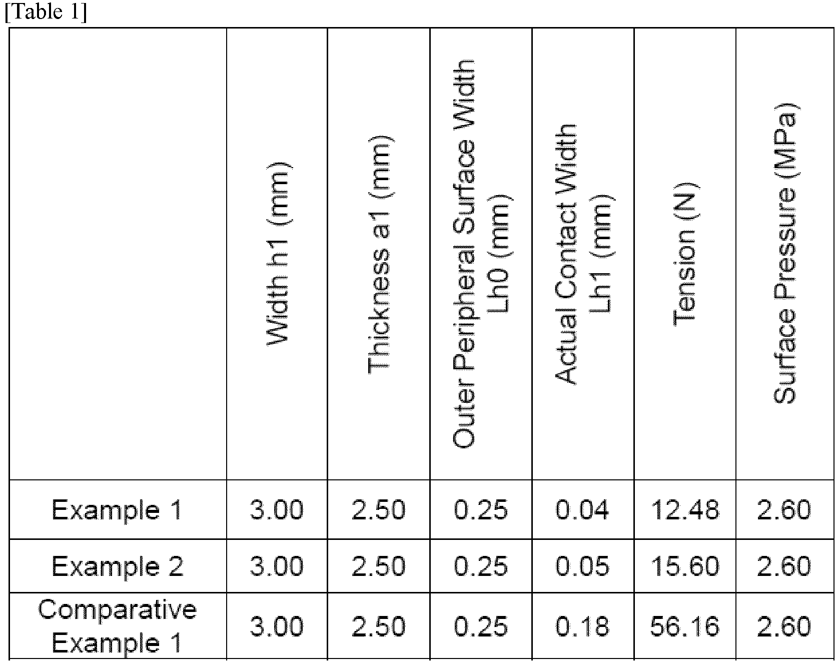

An actual engine test was conducted in which the oil control rings of Examples 1 and 2 and Comparative Example 1 were installed in each cylinder of a straight-six diesel engine, and the oil consumption (LOC) was evaluated. The operating conditions were 2000 rpm and two types of load modes (100% load and 50% load). The evaluation results of oil consumption are shown in Table 2. The LOC improvement rate is a value (%) of the LOC amount of Examples 1 and 2 when the LOC amount of Comparative Example 1 is set to 100%.

**[Table 2]**

| | LOC Improvement Rate (%) | |
|---|---|---|
| | 100% Load | 50% Load |
| Example 1 | 80 | 64 |
| Example 2 | 78 | 65 |
| Comparative Examplle 1 | 1100 | 1100 |

From the evaluation results in Table 2, it was found that, according to the oil control rings 1 of Examples 1 and 2, the LOC amount was improved by about 20% under 100% load (full load) and by about 40% under 50% load (medium load) as compared with Comparative Example 1. As a result, according to the first arcuate surface 11, the sliding contact region 15, which is a portion contributing to oil film formation on the inner peripheral surface of the cylinder, was configured. The first arcuate surface 11 forms an arcuate surface having a radius of curvature R1 where the axial dimension (actual contact width Lh1) serves as a chord length. It was found that, despite the simplification of the cross-sectional shape of the first arcuate surface 11, an effect of easily scraping off oil on the inner peripheral surface of the cylinder during piston descent can be obtained.

As described above, according to one aspect of the oil control ring 1 of the present disclosure, the outer peripheral surface 7a of the first rail portion 7 and the outer peripheral surface 8a of the second rail portion 8 each include a protruding surface 10 having a cross-sectional shape protruding convexly outward in the radial direction. The protruding surface 10 is an arcuate surface having a radius of curvature of 0.30 mm or less in a sliding contact region 15 including a vertex 10a that is a radially outermost point of the first rail portion 7 or the second rail portion 8. According to such a configuration, at least a part (the first arcuate surface 11) of the protruding surface 10 forming the arcuate surface forms a sliding contact region 15 that is symmetrical in the axial direction with respect to the vertex 10a. By making the cross-sectional shape vertically symmetric at least in the sliding contact region 15 in this way, the cross-sectional shape is simplified. The sliding contact region 15 can sufficiently scrape down oil. Therefore, it is possible to reduce oil consumption. Accordingly, it is possible to reduce oil consumption while simplifying the cross-sectional shape of the outer peripheral surface 7a of the first rail portion 7 and the outer peripheral surface 8a of the second rail portion 8.

According to another aspect of the oil control ring 1 of the present disclosure, the outer peripheral surface 7a of the first rail portion 7 and the outer peripheral surface 8a of the second rail portion 8 each include a protruding surface 10 having a cross-sectional shape protruding convexly outward in the radial direction. At least a part (the first arcuate surface 11) of the protruding surface 10 is located on a virtual convex surface 16 passing through the vertex 10a and a pair of points, which are the end portions 11a and 11b, each located at a distance of 0.05 mm on both sides in the axial direction from the vertex 10a and at a predetermined drop on the radially inner side, and the drop is 0.0045 mm or more. According to such a configuration, at least a part of the protruding surface 10 along the virtual convex surface 16 forms a sliding contact region 15 that is symmetrical in the axial direction with respect to the vertex 10a. By making the cross-sectional shape vertically symmetric at least in the sliding contact region 15 in this way, the cross-sectional shape is simplified. The sliding contact region 15 can sufficiently scrape down oil. Therefore, it is possible to reduce oil consumption. Accordingly, it is possible to reduce oil consumption while simplifying the cross-sectional shape of the outer peripheral surface 7a of the first rail portion 7 and the outer peripheral surface 8a of the second rail portion 8.

The vertex 10a is located at the central portion in the axial direction of each of outer peripheral surface 7a of the first rail portion 7 and the outer peripheral surface 8a of the second rail portion 8. According to such a configuration, not only the sliding contact region 15 but also the entire outer peripheral surface 7a of the first rail portion 7 and the outer peripheral surface 8a of the second rail portion 8 become vertically symmetric as a whole. Therefore, it is possible to prevent reverse assembly of the oil control ring 1 front and back in advance.

The outer peripheral surface 7a of the first rail portion 7 and the outer peripheral surface 8a of the second rail portion 8 each include a first arcuate surface 11 including the vertex 10a, a pair of bevel surfaces 7c and 7d that are tapered surfaces inclined at a predetermined angle with respect to the radial direction, and a second arcuate surface 12 connecting the protruding surface 10 and the bevel surfaces 7c and 7d. The radius of curvature R1 of the first arcuate surface 11 is greater than the radii of curvature R2 and R3 of the second arcuate surfaces 12. According to such a configuration, the portions of the first rail portion 7 and the second rail portion 8 that are near the side surface 2c or the side surface 2d of the oil control ring 1 have a shape that is not sharp. Therefore, it is possible to suppress defects that may occur if the shape is sharp.

### [Modification]

Although the embodiments of the present disclosure have been described above, the present disclosure is not limited to the above-described embodiments. The present disclosure can be implemented in various forms with various modifications and improvements based on knowledge of those skilled in the art, including the above-described embodiments.

In the examples of FIGS. 5 and (a) of FIG. 6, the sliding contact region 15 coincides with the range of the first arcuate surface 11, and the entire sliding contact region 15 is an arcuate surface having a radius of curvature R1 of 0.30 mm or less, but the present disclosure is not limited to this example. The sliding contact region may include a flat portion extending in parallel with the axial direction. (b) of FIG. 6 is an enlarged cross-sectional view corresponding to (a) of FIG. 6 for an oil control ring 1M according to a modification.

As shown in FIG. 4 and (b) of FIG. 6, in the outer peripheral surface 7Ma of the first rail portion 7M according to the modification, the protruding surface 10M includes a sliding contact region 15M including a pair of partial arcuate surfaces 11c and 11f and a flat portion 17 connecting the pair of partial arcuate surfaces 11c and 11f. The cross-sectional shape of the first rail portion 7M is, for example, a shape in which the outer peripheral surface 7a is cut out in a predetermined range (flat portion 17) vertically symmetrical with respect to the vertex 10a in the outer peripheral surface 7a of the above-described first rail portion 7.

The pair of partial arcuate surfaces 11c and 11f are provided on the side surface 2c (one side surface) side and the side surface 2d (the other side surface) side, respectively. The end portion on the side surface 2c side of the partial arcuate surface 11c coincides with the end portion on the side surface 2c side of the first arcuate surface 11, which is the end portion 11a. The end portion on the side surface 2d side of the partial arcuate surface 11f coincides with the end portion on the side surface 2d side of the first arcuate surface 11, which is the end portion 11b. The pair of partial arcuate surfaces 11c and 11f each correspond to a part of the upper and lower end sides of the above-described first arcuate surface 11. That is, the pair of partial arcuate surfaces 11c and 11f are each a part of the first arcuate surface 11 having a radius of curvature of 0.30 mm or less passing through the end portions 11a and 11b, which are both ends of the sliding contact region 15M in the width direction A (axial direction).

The pair of partial arcuate surfaces 11c and 11f are symmetrical in the vertical direction with respect to a virtual vertex 10x. The virtual vertex 10x is a virtual radially outermost point of the first arcuate surface 11 passing through the end portions 11a and 11b. The virtual vertex 10x is a virtual vertex corresponding to the above-described vertex 10a. Since the pair of partial arcuate surfaces 11c and 11f do not actually include the vertex 10a unlike the above-described first arcuate surface 11, the virtual vertex 10x can be defined here as a virtual vertex corresponding to the vertex 10a.

The flat portion 17 is a portion having a linear cross-sectional shape in (b) of FIG. 6. The flat portion 17 extends in parallel with the width direction A so as to connect the pair of partial arcuate surfaces 11c and 11f. The end portion on the side surface 2c side of the flat portion 17 coincides with the end portion on the side surface 2d side of the partial arcuate surface 11c, which is the top end portion 11d. The end portion on the side surface 2d side of the flat portion 17 coincides with the end portion on the side surface 2c side of the partial arcuate surface 11f, which is the top end portion 11e. The flat portion 17 extends in a predetermined range symmetrically in the vertical direction with respect to the virtual vertex 10x from the top end portion 11d to the top end portion 11e. Therefore, the pair of partial arcuate surfaces 11c and 11f and the flat portion 17 are vertically symmetrical with respect to the virtual vertex 10x. That is, the sliding contact region 15M has a cross-sectional shape vertically symmetrical with respect to the virtual vertex 10x, which is a virtual radially outermost point of the first arcuate surface 11.

The sliding contact region 15M is a region including a sliding contact portion that slides on the inner peripheral surface of the cylinder and a sliding contact peripheral portion within a certain range on both sides in the axial direction with the sliding contact portion interposed therebetween. The flat portion 17 corresponds to the sliding contact portion that is in sliding contact with the inner peripheral surface of the cylinder. The portions from the top end portion 11d to the end portion 11a and from the top end portion 11e to the end portion 11b correspond to the sliding contact peripheral portions within a certain range on both sides in the axial direction with the sliding contact portion interposed therebetween. In the flat portion 17 and this certain range, the protruding surface 10M includes a sliding contact region 15M, which is a portion of the outer peripheral surface 7Ma of the first rail portion 7M that contributes to oil film formation on the inner peripheral surface of the cylinder.

The flat portion width Lh2, which is the axial dimension from the top end portion 11d to the top end portion 11e of the flat portion 17, may be greater than 0 mm and less than 0.100 mm. The flat portion width Lh2 of the flat portion 17 may be greater than 0 mm and equal to or less than 0.085 mm. The flat portion width Lh2 of the flat portion 17 may be greater than 0 mm and equal to or less than 0.070 mm.

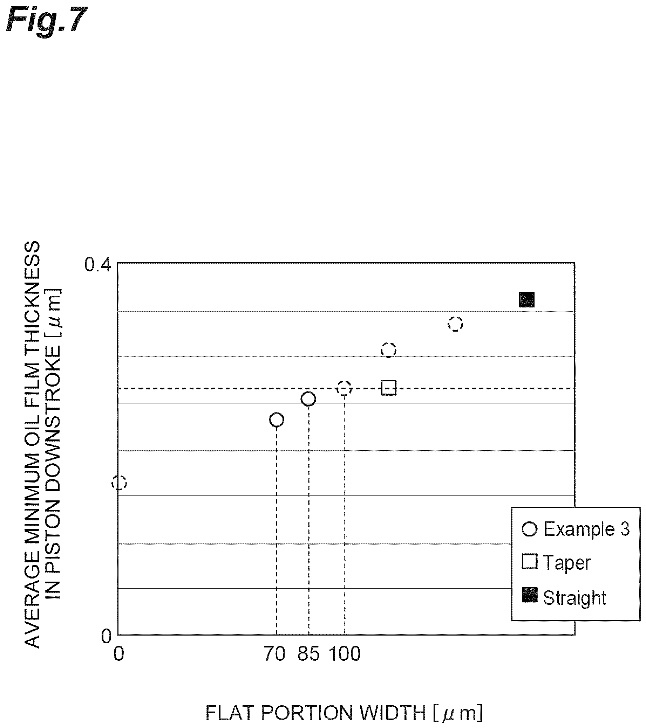

Specifically, FIG. 7 is a diagram illustrating simulation results of the oil control ring 1M having the cross section of (b) of FIG. 6. The horizontal axis in FIG. 7 is the flat portion width Lh2. The vertical axis is the average minimum oil film thickness in the piston downstroke of the internal combustion engine. Each unit of the horizontal and vertical axes is µm. In FIG. 7, simulation results for confirming the effect of reducing oil consumption for the oil control ring 1M are shown. As a simulation, in the example of FIG. 7, theoretical calculation was performed using the Patir & Cheng average Reynolds equation for the oil film thickness between the oil control ring 1M and the inner peripheral surface of the cylinder. In the simulation, the oil control ring 1 used in Example 1 above was provided with the flat portion 17, and the calculation was performed by changing the flat portion width Lh2 of the flat portion 17 to a plurality of values.

In FIG. 7, calculation results for flat portion widths Lh2 of 0 µm (dashed circle), 70 µm (0.070 mm), 85 µm (0.085 mm), 100 µm (0.100 mm) (dashed circle), 120 µm (0.120 mm) (dashed circle), and 150 µm (0.150 mm) (dashed circle) are plotted. The solid circle corresponds to Example 3. As comparative examples, calculation results of a plot (Straight) of an oil control ring having a straight shape parallel to the axial direction as the outer peripheral surface and a plot (Taper) of an oil control ring having a tapered shape inclined in the axial direction as the outer peripheral surface are plotted in FIG. 7. As the oil film thickness, the average minimum oil film thickness in the piston downstroke of the internal combustion engine is calculated. As shown in FIG. 7, in a range where the flat portion width Lh2 is less than 100 µm (0.100 mm), an oil film thickness smaller than the calculation results of the comparative examples of Straight and Taper can be obtained. **In** a range where the flat portion width Lh2 is 85 µm (0.085 mm) or less, an oil film thickness smaller than that when the flat portion width Lh2 is 100 µm (0.100 mm) can be obtained. **In** a range where the flat portion width Lh2 is 70 µm (0.070 mm) or less, an oil film thickness smaller than that when the flat portion width Lh2 is 85 µm (0.085 mm) can be obtained.

As described above, according to the oil control ring 1M, the outer peripheral surface 7Ma of the first rail portion 7M (the same applies to the outer peripheral surface of the second rail portion) includes a protruding surface 10M having a cross-sectional shape protruding convexly outward in the radial direction. The protruding surface 10M includes a sliding contact region 15M including a pair of partial arcuate surfaces 11c and 11f provided on the side surface 2c (one side surface) side and the side surface 2d (the other side surface) side, respectively, and a flat portion 17 extending in parallel with the width direction A so as to connect the pair of partial arcuate surfaces 11c and 11f. The pair of partial arcuate surfaces 11c and 11f are each a part of the first arcuate surface 11 having a radius of curvature of 0.30 mm or less passing through the end portions 11a and 11b, which are both ends of the sliding contact region 15M in the width direction A (axial direction). The sliding contact region 15M has a cross-sectional shape symmetrical in the vertical direction with respect to a virtual vertex 10x, which is a virtual radially outermost point of the first arcuate surface 11. According to such a configuration, the flat portion 17 of the protruding surface 10M and the pair of partial arcuate surfaces 11c and 11f on both upper and lower sides of the flat portion 17 form a sliding contact region 15M that is symmetrical in the width direction A with respect to the virtual vertex 10x. By making the cross-sectional shape vertically symmetric at least in the sliding contact region 15M in this way, the cross-sectional shape is simplified. The sliding contact region 15M can sufficiently scrape down oil. Therefore, it is possible to reduce oil consumption. Accordingly, it is possible to reduce oil consumption while simplifying the cross-sectional shape of the outer peripheral surface 7Ma of the first rail portion 7M and the outer peripheral surface of the second rail portion.

**In** the above-described embodiment, the virtual convex surface 16 coincided with the arcuate surface having a radius of curvature R1, but the present disclosure is not limited to this example. For example, at least a part of the protruding surface 10 may be located on a virtual convex surface 16 having a polygonal cross-sectional shape passing through the vertex 10a and a pair of points.

In the above-described embodiment, the actual contact width Lh1 of the first arcuate surface 11, which is a part of the protruding surface 10, was 0.10 mm, but it may be less than 0.10 mm as in the Example. That is, a pair of positions each separated by 0.05 mm on both sides in the axial direction from the vertex 10a for defining the drop of the virtual convex surface 16 may be in a positional relationship such that the pair of positions sandwich a part of the protruding surface 10 located on the virtual convex surface 16. In such a case, the drop may be converted by a similar approach. For example, at least a part of the protruding surface 10 may be located on a virtual convex surface 16 passing through the vertex 10a and a pair of points each separated by 0.01 mm on both sides in the axial direction from the vertex 10a and located at a predetermined drop on the radially inner side, and the drop may be 0.0009 mm or more.

In the above-described embodiment, the vertex 10a was located at the central portion in the axial direction of the outer peripheral surface 7a of the first rail portion 7, but the present disclosure is not limited to this example. For example, it is sufficient that at least the sliding contact region 15 has a cross-sectional shape symmetrical in the axial direction with respect to the vertex 10a, and each of the first rail portion 7 and the second rail portion 8 may not be symmetrical in the axial direction with respect to the vertex 10a as a whole.

In the above-described embodiment, the protruding surface 10 had a second arcuate surface 12 connecting the protruding surface 10 and the bevel surfaces 7c and 7d, but the present disclosure is not limited to this example. For example, instead of the second arcuate surface 12, a polygonal cross-sectional shape or a linear tapered surface may be used.

The following describes the constituent requirements of various aspects of the present disclosure.

### (Invention 1)

An oil control ring comprising:
a main body portion having an annular shape, that includes an inner peripheral surface and an outer peripheral surface, and one side surface and an other side surface substantially orthogonal to the inner peripheral surface; and
a coil expander installed along the inner peripheral surface,
wherein the main body portion includes a pair of first rail portion and second rail portion each having an annular shape, and a pillar portion connecting the first rail portion and the second rail portion,
wherein the outer peripheral surfaces of the first rail portion and the second rail portion each include a protruding surface having a cross-sectional shape protruding convexly outward in a radial direction, and
wherein the protruding surface is an arcuate surface having a radius of curvature of 0.30 mm or less in a sliding contact region including a vertex that is a radially outermost point of the first rail portion or the second rail portion.

### (Invention 2)

An oil control ring comprising:
a main body portion having an annular shape, that includes an inner peripheral surface and an outer peripheral surface, and one side surface and an other side surface substantially orthogonal to the inner peripheral surface; and
a coil expander installed along the inner peripheral surface,
wherein the main body portion includes a pair of first rail portion and second rail portion each having an annular shape, and a pillar portion connecting the first rail portion and the second rail portion,
wherein the outer peripheral surfaces of the first rail portion and the second rail portion each include a protruding surface having a cross-sectional shape protruding convexly outward in a radial direction, and
wherein at least a part of the protruding surface is located on a virtual convex surface passing through a vertex that is an outermost point in a radial direction of the first rail portion or the second rail portion, and a pair of points each spaced apart from the vertex by 0.05 mm on both sides in an axial direction and positioned inward in the radial direction at a predetermined drop, and
wherein the drop is 0.0045 mm or more.

### (Invention 3)

The oil control ring according to Invention 1 or 2,
wherein the vertex is located at a central portion in an axial direction of the outer peripheral surface of each of the first rail portion and the second rail portion.

### (Invention 4)

The oil control ring according to any one of Inventions 1 to 3,
wherein the outer peripheral surfaces of the first rail portion and the second rail portion each include a first arcuate surface including the vertex, a pair of bevel surfaces that are tapered surfaces inclined at a predetermined angle with respect to the radial direction, and second arcuate surfaces each connecting the protruding surface and the bevel surface, and
wherein a radius of curvature of the first arcuate surface is greater than a radius of curvature of the second arcuate surface.

### (Invention 5)

The oil control ring according to Invention 4,
wherein a ratio R2/R1 of the radius of curvature R2 of the second arcuate surface to the radius of curvature R1 of the first arcuate surface is 0.1 or more and 0.6 or less.

### (Invention 6)

An oil control ring comprising:
a main body portion having an annular shape, that includes an inner peripheral surface and an outer peripheral surface, and one side surface and an other side surface substantially orthogonal to the inner peripheral surface; and
a coil expander installed along the inner peripheral surface,
wherein the main body portion includes a pair of first rail portion and second rail portion each having an annular shape, and a pillar portion connecting the first rail portion and the second rail portion,
wherein the outer peripheral surfaces of the first rail portion and the second rail portion each include a protruding surface having a cross-sectional shape protruding convexly outward in a radial direction,
wherein the protruding surface includes a sliding contact region including a pair of partial arcuate surfaces and a flat portion, wherein the pair of partial arcuate surfaces are provided on the one side surface and the other side surface, respectively, wherein the flat portion extends in parallel with an axial direction so as to connect the pair of partial arcuate surfaces,
wherein the pair of partial arcuate surfaces are each a part of an arcuate surface having a radius of curvature of 0.30 mm or less passing through both axial ends of the sliding contact region, and
wherein the sliding contact region has a cross-sectional shape symmetrical with respect to a virtual vertex that is a virtual outermost point of the arcuate surface in the radial direction.

### (Invention 7)

The oil control ring according to Invention 6,
wherein an axial dimension of the flat portion is greater than 0 mm and less than 0.100 mm.

### Reference Signs List

1, 1M: Oil control ring; 2: Main body portion; 2a: Inner peripheral surface; 2b: Outer peripheral surface; 2c: Side surface (one side surface); 2d: Side surface (the other side surface); 3: Coil expander; 7, 7M: First rail portion; 8: Second rail portion; 7a, 8a: Outer peripheral surface; 7c: Bevel surface; 7d: Bevel surface; 10, 10M: Protruding surface; 10a: Vertex; 10x: Virtual vertex; 11: First arcuate surface; 11c, 11f: Partial arcuate surface; 12: Second arcuate surface; 13: Pillar portion; 15, 15M: Sliding contact region; D1: Drop; R1, R2, R3: Radius of curvature.

## Claims

1. An oil control ring comprising:
a main body portion having an annular shape, that includes an inner peripheral surface and an outer peripheral surface, and one side surface and an other side surface substantially orthogonal to the inner peripheral surface; and
a coil expander installed along the inner peripheral surface,
wherein the main body portion includes a pair of first rail portion and second rail portion each having an annular shape, and a pillar portion connecting the first rail portion and the second rail portion,
wherein the outer peripheral surfaces of the first rail portion and the second rail portion each include a protruding surface having a cross-sectional shape protruding convexly outward in a radial direction, and
wherein the protruding surface is an arcuate surface having a radius of curvature of 0.30 mm or less in a sliding contact region including a vertex that is a radially outermost point of the first rail portion or the second rail portion.

2. An oil control ring comprising:
a main body portion having an annular shape, that includes an inner peripheral surface and an outer peripheral surface, and one side surface and an other side surface substantially orthogonal to the inner peripheral surface; and
a coil expander installed along the inner peripheral surface,
wherein the main body portion includes a pair of first rail portion and second rail portion each having an annular shape, and a pillar portion connecting the first rail portion and the second rail portion,
wherein the outer peripheral surfaces of the first rail portion and the second rail portion each include a protruding surface having a cross-sectional shape protruding convexly outward in a radial direction,
wherein at least a part of the protruding surface is located on a virtual convex surface passing through a vertex that is an outermost point in a radial direction of the first rail portion or the second rail portion, and a pair of points each spaced apart from the vertex by 0.05 mm on both sides in an axial direction and positioned inward in the radial direction at a predetermined drop, and
wherein the drop is 0.0045 mm or more.

3. The oil control ring according to claim 1 or 2,
wherein the vertex is located at a central portion in an axial direction of the outer peripheral surface of each of the first rail portion and the second rail portion.

4. The oil control ring according to claim 1 or 2,
wherein the outer peripheral surfaces of the first rail portion and the second rail portion each include a first arcuate surface including the vertex, a pair of bevel surfaces that are tapered surfaces inclined at a predetermined angle with respect to the radial direction, and second arcuate surfaces each connecting the protruding surface and the bevel surface, and
wherein a radius of curvature of the first arcuate surface is greater than a radius of curvature of the second arcuate surface.

5. The oil control ring according to claim 4,
wherein a ratio R2/R1 of the radius of curvature R2 of the second arcuate surface to the radius of curvature R1 of the first arcuate surface is 0.1 or more and 0.6 or less.

6. An oil control ring comprising:
a main body portion having an annular shape, that includes an inner peripheral surface and an outer peripheral surface, and one side surface and an other side surface substantially orthogonal to the inner peripheral surface; and
a coil expander installed along the inner peripheral surface,
wherein the main body portion includes a pair of first rail portion and second rail portion each having an annular shape, and a pillar portion connecting the first rail portion and the second rail portion,
wherein the outer peripheral surfaces of the first rail portion and the second rail portion each include a protruding surface having a cross-sectional shape protruding convexly outward in a radial direction,
wherein the protruding surface includes a sliding contact region including a pair of partial arcuate surfaces and a flat portion, wherein the pair of partial arcuate surfaces are provided on the one side surface and the other side surface, respectively, wherein the flat portion extends in parallel with an axial direction so as to connect the pair of partial arcuate surfaces,
wherein the pair of partial arcuate surfaces are each a part of an arcuate surface having a radius of curvature of 0.30 mm or less and passing through both axial ends of the sliding contact region, and
wherein the sliding contact region has a cross-sectional shape symmetrical with respect to a virtual vertex that is a virtual outermost point of the arcuate surface in the radial direction.

7. The oil control ring according to claim 6,
wherein an axial dimension of the flat portion is greater than 0 mm and less than 0.100 mm.
